Europäisches Patentamt

European Patent Office

Office européen des brevets

(11) Publication number: **0 486 962 A1**

# EUROPEAN PATENT APPLICATION

(21) Application number: **91119518.8**

(22) Date of filing: **15.11.91**

(51) Int. Cl.5: **F16L 47/04**, F16L 47/06,
F16L 11/11

(30) Priority: **19.11.90 IT 2213690 U**

(43) Date of publication of application:
**27.05.92 Bulletin 92/22**

(84) Designated Contracting States:
**AT BE CH DE DK ES FR GB GR LI LU NL SE**

(71) Applicant: **GEWISS S.p.A.**
**Via Provinciale 61**
**I-24069 Cenate Sopra (Bergamo)(IT)**

(72) Inventor: **Bosatelli, Domenico**
**Via degli Alpini**
**I-24069 Cenate Sotto (Prov. of Bergamo)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Multi-purpose flexible sleeve.**

(57) Multi-purpose sleeve made of flexible material for providing a sealed joint between pipes in general and particularly between pipes for protecting electric cables, telephone cables and the like, constituted by a segment of a tubular element (1) made of flexible material, the cylindrical wall (2) whereof is shaped so as to be externally provided with a corrugated, raised, uniform and continuous surface in the shape of a cylindrical spiral with constant pitch and with rounded threads (3), and to be internally provided with a corresponding continuous corrugation shaped like an inner thread (3a), the opposite ends (4) of the corrugated segment having threaded portions (4a) engaged by a locking ring (5) suitable for providing a sealed joint, by means of interposed gaskets, with corresponding ends of the pipes to be joined.

FIG. 1

The present invention relates to a multi-purpose flexible sleeve, and in particular to a sleeve-shaped tubular body made of elastically flexible material, particularly suitable for the sealed linking of pipes in general and in particular of pipes normally used to protect electric and telephone cables and the like, regardless of the arrangement and orientation of said pipes to be connected.

The linking of rigid or flexible pipes and of tubular sheaths in general used to protect electric cables and the like can currently entail, besides an axial or linear link, also offset linear connections and often arc-like links, i.e. connections between two pipes (or between a device and a pipe) which are arranged at an angle with respect to one another.

Sleeves made of rigid material, conveniently curved in a single-elbow or double-elbow shape according to the type of link required, are currently generally used to link rigid pipes which are axially offset or orientated at an angle with respect to one another; thus, in practice, it is necessary to have available a wide range of sleeves curved at different angles, from a few degrees up to approximately 90°, in order to meet all installation requirements.

Since rigid pipes for protecting electric cables, especially those intended to remain in view, often entail numerous detours in order to be able to conceal and protect the pipes against possible damage and also due to aesthetic reasons, the need to have available rigid curved sleeves with different curvature radii entails a significant economical burden for transport, packaging and storage, as well as particular and onerous manufacturing methods.

Sleeves made of a flexible material, such as plastics, rubber or the like, are also known and used, but their application is limited to a few cases, since they normally cannot ensure sealed joints; they are also not always free from curvature defects, especially in the case of curvatures with a small radius.

The aim of the present invention is therefore to provide a sleeve made of flexible material for joining rigid and flexible pipes, whether mutually aligned or axially offset, which contain electric and telephone cables and the like, which is structured so as to allow the sealed joining of pipes regardless of their orientation or spatial arrangement and particularly suitable for allowing elbow joints at angles which can vary gradually up to 90° without undergoing deformations and/or cracks which would limit its integrity and aesthetics.

Another object of the present invention is to provide a multi-purpose flexible sleeve for the sealed joining of pipes with various diameter and thickness which is structured so as to allow, by virtue of its particular shape and of the flexible material by which it is constituted, the absorption of thermal expansions, so as to be indeformable and be able to withstand external loads which would lead to crushing, such loads being always possible during installation operations.

A further object of the present invention is to provide a multi-purpose flexible sleeve which is easy and rapid to assemble both manually and by means of appropriate tools and is monolithically provided with ends which are already preset for securing with sealing rings or are threaded or provided with raised portions for coupling to the corresponding ends of the pipes to be joined.

This aim, these objects and others are achieved by a flexible sleeve as defined in the appended claims.

Further structural and applicative characteristics of the sleeve according to the invention will become apparent from the following detailed description, given with reference to the accompanying drawings, which are given only by way of non-limitative example, wherein:

figure 1 is a partially sectional side elevation view of a flexible sleeve according to the present invention, with threaded end couplings;

figure 2 is an enlarged-scale sectional view of an end of the tube of figure 1;

figures 3 and 4 are respectively a sectional view and a view taken along the line A-A of figure 1 of a tubular connection for providing a sealed joint between the sleeve and a pipe, with the interposition of a frustum-shaped tubular gasket;

figure 4a is a sectional view of the frustum-shaped gasket used for providing a seal, secured by the tubular connection of figure 3;

figure 5 is a sectional view of an end of the sleeve according to the present invention, provided with a cup-like connection for providing a sealed and forced coupling by means of a tubular gasket interposed between the pipe to be connected and the inner surface of the cup-like connection;

figure 6 is an equally sectional view of a coupling between a pipe and the sleeve, performed by forcing a tubular gasket between the end of the pipe and the inside of the cup-like connection; and

figures 7-8 and 9 are sectional views of some types of tubular gaskets used for the forced coupling according to figures 5 and 6.

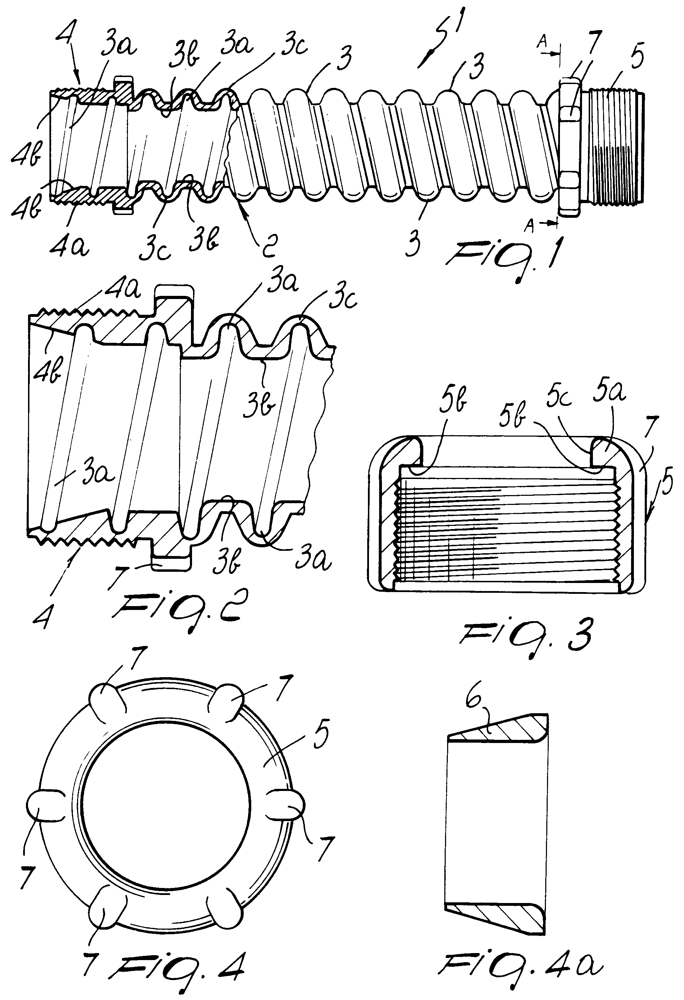

With reference to the above figures, and in particular to figures 1 to 4, the sleeve according to the present invention is substantially constituted by a segment of a flexible tubular element made of plastics, rubber or the like, which is generally indicated by the reference numeral 1 in the figures. The flexible tubular element 1 has a cylindrical wall 2 which is shaped so as to externally have a continuous raised corrugation defined like a cylindrical spiral thread, of which the individual ridges 3 are rounded and arranged with a constant pitch or center distance.

All the ridges (or external corrugations) are provided so as to be internally hollow, as indicated by 3a in the figures, so that all the cavities 3a form a continuous cylindrical spiral, similarly to a thread arranged inside a hollow cylindrical body; in the present case, the ridges of the internal thread are also equidistant (same pitch) and are substantially flattened at their inner ends, as indicated by 3b, so as to define a cylindrical surface inside the sleeve.

The particular internal and external cylindrical-spiral shape of the sleeve wall allows in practice to bend said sleeve along angles which can vary uninterruptedly, since upon each curving imparted to the sleeve the corrugations 3 tend to divaricate in the extrados regions and to move mutually closer, reducing the cavities 3a of said corrugations, in the intrados regions, exploiting the elasticity of the material, without however causing deformations or partial compressions of the sleeve in the curved region.

The dimensions of the corrugations 3 and of the pitch therebetween are provided in relation to the pitch diameter of the sleeve, so as to allow sleeves with different diameters to assume curvature angles variable up to approximately 90°.

In order to improve the bending possibilities of the sleeve, especially at considerable angles, the thickness of the cusp 3c of each corrugation 3 (figure 1) is provided lower than that of the lateral parts of said corrugations; in this manner, the reaction opposed by said corrugations to the bending efforts is smaller and the cylindrical shape of the sleeve is not altered in the curved part.

Threaded or non-threaded cylindrical parts can in practice be provided at the opposite ends of the spiral-shaped sleeve as described above, in order to provide a sealed connection with rigid or flexible pipes, whether mutually coaxial or axially offset in any way.

For this purpose, according to the invention, a first type of coupling 4 (figures 1-2) is defined by a portion of corrugated sleeve which is externally provided with a thread 4a on which a locking ring 5 is screwed. The initial inner part 4b of the mouth of each threaded portion 4 is defined so as not to be cylindrical but substantially frustum-shaped; the same internal thread 3a is furthermore defined within the frustum-shaped region 4b as a continuation of the thread defined inside said sleeve. The outer diameter and the inner diameter of each end portion 4 are furthermore slightly larger than those of the outer and inner diameters of the sleeve, in order to allow extraction, by unscrewing, at one or both of the ends of the sleeve of the male element (or of the opposite male elements) used to define the internal corrugation 3a.

The sealed connection between a pipe and the threaded end 4 of the sleeve can be performed by inserting, in contact with the frustum-shaped surface 4b, a tubular gasket 6 which is also externally frustum-shaped and by then screwing the ring 5 partially on the pipe to be connected (which is arranged with its end within the sleeve) and then on the thread 4a of the sleeve and by then tightening the ring 5 completely so as to compress the gasket between the end 4b of the sleeve and the pipe to be connected.

Similarly, a tight seal can be provided by defining, at the curved end 5a of the ring 5 (figure 3), an inlet 5c for the pipe and by defining immediately thereafter an increase in the inner diameter of the ring, so as to create an annular step 5b with a larger diameter which corresponds to that of the thread 4a of the sleeve.

By means of a flange (not illustrated) which is applied head-on to the pipe and is arranged so as to rest against the step 5b of the ring 5, the pipe is secured to the sleeve by axially compressing the internal gasket 6 by means of the ring.

Equally spaced raised portions 7 are furthermore defined on the outer surface of the ring 5; said portions are suitable for constituting suitable means for gripping with tools, so as to perform locking, and at the same time give the ring a pleasant aesthetic effect.

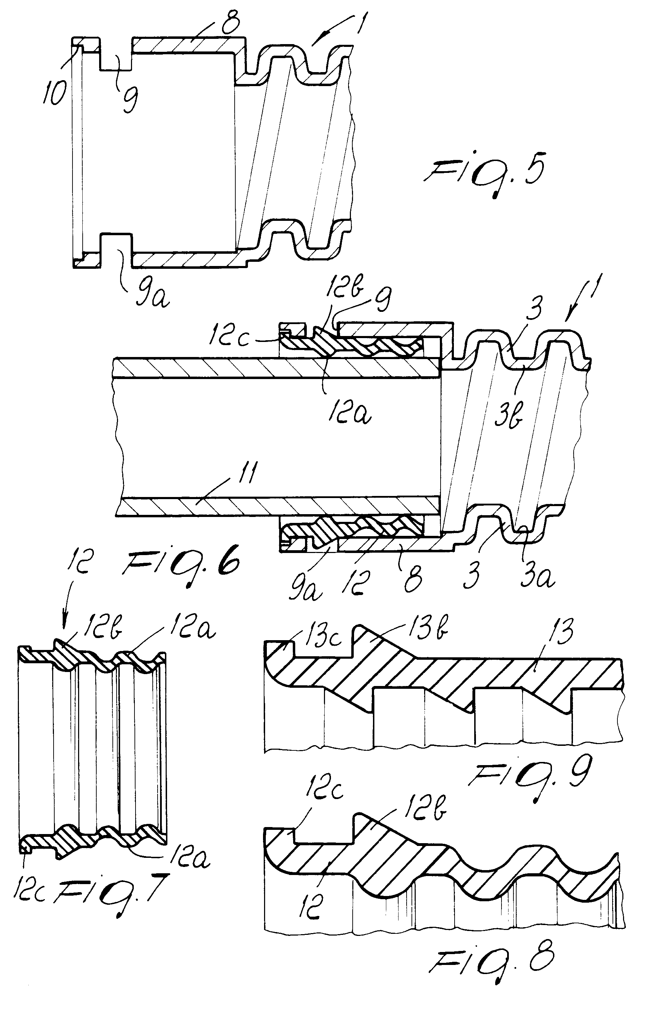

Still according to the invention, the non-corrugated ends 4 of the flexible sleeve 1 can be defined in the shape of a cup 8, as illustrated in figures 5 and 6, wherein two quadrangular, circular or similar openings 9, 9a are defined in diametrically opposite positions and a flared portion 10, i.e. an internal annular seat the diameter whereof is larger than the inner diameter of said cup, is also defined at the free end of the cup. This embodiment allows to lock the end of a pipe 11 (figure 6) within the body of the cup 8 by interposing, between the pipe and the inner surface of the cup-shaped connection, a tubular gasket 12 (or 13) such as those illustrated in figures 7-8 and 9 and by axially forcing the pipe 11 into the cup-shaped body. The forced entry of the pipe compresses the inner annular protrusions 12a of the gasket 12, creating a seal between the surfaces which are in contact; retention against the extraction of the pipe from the cup-like body is automatically provided by the entry, with stable locking, of the outer radial protrusions 12b (or 13b) of the gasket 12 (or 13) within the openings 9-9a and then by the stopping of the end tooth 12c (or 13c) of said gasket 12 (or 13) within the terminal flared portion 10 defined at the end of the cup-like body 8.

In practice it has been observed that the particular structure, corrugated along a continuous spiral with constant pitch and with thickness reductions in the annular bends of the corrugation, allows to obtain a very flexible sleeve, which can undergo bendings with a radius which can vary up to approximately 90° without deformation or crushing of the tubular body which constitutes said sleeve.

To the above, it should furthermore be added that the flexible sleeve, instead of being provided in a sealed version, can be of the simply protected type, in which case the tubular element is inserted simply by pressure at the ends of said flexible tubular segment, which has protruding lips which arrange themselves to the side of the inner thread or spiral configuration.

In practice, the dimensions, the materials employed and the types of connection and gasket can furthermore vary according to the requirements of application without abandoning the scope of the innovative concept of the present invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Multi-purpose flexible sleeve, particularly for the sealed joining of pipes, sheaths and the like, characterized in that it comprises a flexible tubular element (1) defining a cylindrical wall (2) which is shaped so as to be externally provided with a corrugated, protruding, uniform and continuous surface in the shape of a cylindrical spiral with a constant pitch and with rounded ridges (3), and which is internally provided with a corresponding continuous corrugation shaped like an inner thread (3a), the opposite ends (4) of said flexible tubular element (1) having threaded portions (4a) and connecting flange elements suitable for constituting means for providing a sealed joint, by means of gaskets (6), with corresponding ends of the pipes to be connected.

2. Sleeve according to claim 1, characterized in that the thickness of the outer curved regions (3c) of the continuous thread (3a), which constitutes said spiral-shaped corrugation, is smaller than the thickness of the lateral walls of said thread, so as to facilitate the curving of the sleeve without reducing the compression strength of the tubular body which constitutes said sleeve.

3. Sleeve according to claims 1 and 2, characterized in that the cylindrical inner surface of said opposite ends (4) is chamfered so as to constitute a frustum-shaped mouth (4b) suitable for allowing the insertion of a frustum-shaped tubular gasket (6) between the end (4) of the sleeve (1) and the pipe to be connected, which is partially inserted in said end of said sleeve.

4. Sleeve according to one or more of the preceding claims, characterized in that the ends (4) of the tubular body (1) which defines the sleeve are in the shape of a cup (8) which is provided with openings (9,9a) which are arranged in substantially mutually diametrically opposite positions and are suitable for constituting snap-lock stop means for teeth elements (12b,13b) which protrude from corrugated tubular gaskets (12,13) which are inserted by forcing between the end of a pipe (11) to be connected to the flexible sleeve (1) and the inner cylindrical surface of the cup-like body (8).

5. Sleeve according to the preceding claims, characterized in that the inner vertices (3b) of the threads of the corrugation defined inside the sleeve (1), which are arranged offset with respect to the outer curved threads, have a flattened surface so as to define, inside the sleeve, a continuous cylindrical cavity having a constant diameter.

6. Sleeve, according to one or more of the preceding claims, characterized in that it comprises, at the inner ends of said tubular segment, protruding lips which arrange themselves adjacent to said inner thread for press-on coupling to the ends of the pipes to be connected.

Fig. 1

Fig. 2

Fig. 3

Fig. 4

Fig. 4a

Fig.5

Fig.6

Fig.7

Fig.9

Fig.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 421 530 (PRYOR)<br>* the whole document * | 1,3 | F16L47/04<br>F16L47/06 |
| Y | | 2,5 | F16L11/11 |
| | --- | | |
| Y | US-A-3 794 080 (HUSTON ET AL.)<br>* figure 2 * | 2,5 | |
| | --- | | |
| A | DE-A-2 007 649 (WARD)<br>* page 5, line 16 - page 6, line 17; figure 2 * | 1 | |
| | --- | | |
| A | US-A-4 046 387 (LEE) | | |
| | --- | | |
| A | FR-A-2 386 766 (VOGEL  SANG) | | |
| | ----- | | |

TECHNICAL FIELDS SEARCHED (Int. Cl.5)

F16L

The present search report has been drawn up for all claims

| Place of search | Date of completion of the search | Examiner |
|---|---|---|
| THE HAGUE | 10 FEBRUARY 1992 | ANGIUS P. |